Europäisches Patentamt

European Patent Office

Office européen des brevets

(19)

(11) Numéro de publication : **0 145 578**
**B1**

(12) **FASCICULE DE BREVET EUROPÉEN**

(45) Date de publication du fascicule du brevet :
**26.04.89**

(51) Int. Cl.⁴ : **G 01 N 30/56**

(21) Numéro de dépôt : **84402418.2**

(22) Date de dépôt : **27.11.84**

(54) **Perfectionnements aux appareils de chromatographie.**

(30) Priorité : 02.12.83 FR 8319315
22.11.84 FR 8417796

(43) Date de publication de la demande :
**19.06.85 Bulletin 85/25**

(45) Mention de la délivrance du brevet :
**26.04.89 Bulletin 89/17**

(84) Etats contractants désignés :
**DE GB NL**

(56) Documents cités :
**EP–A– 0 008 921
EP–A– 0 106 746
FR–A– 1 412 982
FR–A– 2 522 154
US–A– 3 440 864
US–A– 3 966 609
JOURNAL OF CHROMATOGRAPHIC SCIENCE, vol. 12, octobre 1974, pages 564-569, US; E. GODBILLE et al.: "Descrption and performance of an 8 cm i.d. column for preparative scale high pressure liquid-solid chromatograhy"
ANALYTICAL CHEMISTRY, vol. 31, 1959, page 2114, US; W.G. JENNINGS: "Device to control channeling, voids, and disruption of pressure-developed chromatographic columns"**

(73) Titulaire : **GROUPE INDUSTRIEL DE REALISATIONS ET APPLICATIONS
Rue des Bruyères Cidex 21 Berlanne-Industriel
F-64160 Morlaas (FR)**

(72) Inventeur : **Couillard, Francois
42 rue Henri Faisans
F-64000 Pau (FR)**

(74) Mandataire : **Hirsch, Marc-Roger
Cabinet Hirsch 34 rue de Bassano
F-75008 Paris (FR)**

EP 0 145 578 B1

Jouve, 18, rue St-Denis, 75001 Paris, France

## Description

La présente invention a pour objet des perfectionnements aux appareils de chromatographie et en particulier aux colonnes à garnissage poreux.

Il est connu dans l'art antérieur de recourir à des colonnes tubulaires présentant un piston ou autre corps coulissant permettant de tasser le garnissage dans une chambre entre ce piston et un fond fixe ou couvercle amovible, le piston étant mû par un vérin ou autre dispositif actionneur lié à la tige du piston.

La présente invention a pour but de faciliter les opérations et de simplifier le matériel pour leur mise en oeuvre afin d'assurer les meilleures conditions pendant les étapes successives, à savoir le remplissage avec le garnissage, son tassement, l'étape chromatographique proprement dite avec le maintien du tassement et enfin la phase finale soit de retour aux conditions initiales, soit de vidange notamment pour changement du garnissage.

On connaît du brevet français FR-A-2 219 797 un appareil de chromatographie constitué par une colonne destinée à contenir un support en matière adsorbante, ladite colonne comprenant :

- un tube muni à une de ses extrémités d'un couvercle perméable aux fluides (liquides ou gaz) et communiquant avec l'extérieur ;
- un corps coulissant le long de l'axe dudit tube consistant en un piston formé d'une part d'une tête constituée par une plaque poreuse perméable aux fluides et qui permet d'exercer une pression à l'intérieur du tube, et d'autre part d'une tige de piston permettant de commander le déplacement de la tête de piston.

Il est indiqué dans ce brevet français que l'appareil ainsi décrit permet d'exercer une pression sur les particules susceptibles de constituer le support adsorbant. Une telle pression peut être exercée lors du remplissage de la colonne, après qu'une suspension des particules de ladite matière ait été introduite dans le tube, afin de refouler ainsi le liquide à travers les plaques poreuses et de comprimer lesdites particules entre le corps coulissant et le couvercle, et ainsi de former le support adsorbant nécessaire pour la mise en oeuvre précise du procédé de chromatographie, à savoir éviter une mauvaise homogénéité du tassement ce qui constitue un défaut important des colonnes de chromatographie.

En fait, l'appareil décrit dans ce brevet français présente divers inconvénients :

- d'une part, il nécessite une tige de piston pour transmettre à la tête de piston le mouvement de déplacement nécessaire pour assurer le refoulement du liquide formant la suspension des particules dont le garnissage est formé. Cette tige doit présenter une longueur au moins égale à la longueur de course du piston et donc, nécessite une longueur pratiquement égale à la longueur de la colonne, si l'on veut employer la colonne uniquement sur une faible partie de sa longueur.

En fait, une telle longueur de course du piston (qui serait dans certains cas de l'ordre de 3 à 4 mètres) nécessite en dessous de la colonne un espace suffisant pour assurer cette course ;

- d'autre part, lorsque, à la suite d'un usage prolongé d'une colonne, se produit dans la colonne un faible tassement du garnissage dû à une constriction, un écrasement ou à une faible dilution de la masse adsorbante conduisant à une perte du pouvoir de résolution de la colonne, il n'est plus possible de compenser ce tassement si la course du piston est limitée à une partie de la colonne, de sorte qu'il faut ouvrir la colonne et ajouter un complément de masse adsorbante ; ceci n'est pas aisé et peut se révéler nécessaire avec une certaine fréquence, sans compter que pour de faibles tassements inférieurs à la dimension des particules de masse adsorbante, cela peut s'avérer impossible.

Le document EP-A-0 008921 décrit un ensemble chromatographique présentant une colonne fermée à ses deux extrémités et contenant un piston définissant d'une part la chambre chromatographique destinée à recevoir le garnissage et de l'autre une enceinte destinée à recevoir un fluide assurant le tassement du garnissage grâce à la pression qu'il exerce sur le piston. Le fluide à chromatographier, indépendant du fluide propulsant le piston, circule à travers un tube rigide solidaire du piston et traversant l'enceinte du fluide de propulseur et l'extrémité correspondante de la colonne, dans laquelle elle coulisse. Cette disposition présente les mêmes inconvénients que la tige de piston de la demande française ci-dessus décrite avec les problèmes d'étanchéité que cela comporte et les risques de fuites entre le fluide propulseur et le mélange à chromatographier ou l'extérieur.

La présente invention a pour objet un appareil perfectionné permettant de pallier les inconvénients des appareils connus et notamment de l'appareil selon le brevet français précité.

En fait, l'appareil de chromatographie selon l'invention peut être utilisé avec des volumes extrêmement différents de masse adsorbante sans impliquer la nécessité de disposer d'un volume perdu important en-dessous ou en-dessus de la colonne pour assurer la course du piston. En outre, il ne nécessite pas des investissements en matériels de dimensions différentes puisqu'une seule colonne de grande longueur peut aisément s'adapter à toute longueur requise. De plus, les problèmes d'étanchéité et de conservation de cette étanchéité s'avèrent plus aisés à résoudre.

La présente invention a pour objet un appareil de chromatographie ou colonne de chromatographie perfectionné constitué par un tube dont une partie constitue une chambre destinée à contenir un garnissage ou masse de matière adsorbante, ce tube comportant à chacune de ses extrémités une paroi d'extrémité présentant des moyens de communication avec l'extérieur et d'autre part, au moins un corps coulissant se déplaçant longitudinalement dans le tube et présentant des moyens de liaison avec un conduit communiquant avec l'extérieur, ledit appareil de chromatographie étant caractérisé en ce que ledit corps coulissant est déplacé par la pression exercée par un fluide sous pression injecté dans une enceinte formée entre ledit corps coulissant ou piston et la paroi extrême opposée à la chambre contenant le garnissage.

Par ailleurs, les moyens prévus pour créer ladite pression dans l'enceinte comprennent un circuit hydraulique formé, d'une part d'une conduite reliant au réservoir d'agent d'élution et la partie du tube destinée à contenir le garnissage, ladite conduite comportant une pompe et une vanne, et formé d'autre part d'une conduite de dérivation comprenant éventuellement une vanne, ladite conduite de dérivation reliant ladite enceinte et la conduite d'amenée en un point situé entre ladite pompe et ladite vanne.

Sont également prévus deux clapets tarés, respectivement placés sur la conduite d'amenée entre ledit point et la vanne et sur la conduite de dérivation entre ledit point et l'enceinte.

En outre, sur la conduite de dérivation est placée entre ladite enceinte et le clapet une conduite d'évacuation du fluide hydraulique, ladite conduite comportant une vanne. Quant au corps coulissant ou piston, il est traversé par des moyens de liaison consistant en un conduit communiquant avec l'extérieur, ce conduit étant un conduit souple dont la longueur est au moins égale à la course possible du corps coulissant.

On peut également prévoir deux corps coulissants, chacun d'entre eux étant disposé à l'une des extrémités du tube précité, une liaison étant établie entre les deux enceintes.

Diverses autres dispositions peuvent être prévues et en particulier les suivantes :

La surface du corps coulissant destinée à être opposée au garnissage est supérieure à la surface du corps coulissant destinée à être au contact du garnissage.

Le corps coulissant comporte des moyens de liaison avec les moyens de communication avec l'extérieur prévus dans la paroi d'extrémité, ces moyens de communication étant reliés à un circuit de fourniture de la phase mobile destinée à être employée pour l'élution.

La pression destinée à être exercée dans ladite enceinte est exercée par le fluide d'élution et le complément de pression résulte du jeu des tarages relatifs des clapets tarés placés sur le circuit hydraulique et la conduite de dérivation.

Pour faire revenir le piston ou corps coulissant après l'étape chromatographique proprement dite, on peut inverser le sens de circulation du fluide entre pompe et enceinte utilisée pour la propulsion par un jeu de vannes et de canalisations d'inversion.

Afin d'éviter que des particules de garnissage ne tendent à s'introduire entre piston et colonne tubulaire, le fluide est amené au piston et pénètre dans la chambre chromatographique par des entrées réparties sur la périphérie du piston ce qui tend à écarter les particules de la paroi du tube au voisinage immédiat du piston.

Le piston peut également comporter un dispositif fermant ces entrées lors de l'étape chromatographique proprement dite par exemple au-delà d'un seuil de pression.

On peut également dans le cas des pistons à deux sections les constituer à l'aide de deux éléments pouvant se réparer lorsque l'un arrive en fin de course de façon à modifier la pression exercée sur le garnissage. Ainsi, en limitant la course de la partie à grande section, seule s'exerce au moment de l'étape chromatographique la pression sur une section plus faible. On peut également recourir à des pistons à double effet ou à deux pistons à actions conjuguées et/ou successives. On peut également envisager non de simples chapeaux ou couvercles de fermeture de la colonne mais des têtes contenant les pistons et leurs alimentations, ce qui simplifie considérablement les montages et démontages.

La présente invention concerne également le procédé de séparation chromatographique consistant essentiellement à mettre en place le garnissage, à exercer la pression fluide pour le tasser, à continuer à exercer la pression nécessaire au maintien du tassement pendant l'étape chromatographique proprement dite, à effectuer l'étape d'élution, puis éventuellement à modifier la pression soit pour revenir aux conditions initiales, soit pour changer le garnissage.

Pour mieux faire comprendre les caractéristiques techniques et les avantages de la présente invention, on va en décrire divers exemples de réalisation, étant bien entendu que ceux-ci ne sont pas limitatifs quant à leur mode de mise en oeuvre et aux applications qu'on peut en faire.

On se reportera aux figures suivantes qui représentent schématiquement :

- les figures 1 à 6 des coupes axiales sur des dispositifs chromatographiques conformes à l'invention selon six modes de réalisation différents ; la figure 6 étant limitée à la coupe sur une tête de colonne ;

- la figure 7 un circuit de montage de pompe à inversion de courant fluide ;

- la figure 8 un détail de réalisation d'un piston en coupe axiale. Dans tous les exemples, on se référera à la chromatographie en phase liquide et ceci à titre illustratif, ce que l'homme de l'art transposera aisément à la chromatographie en phase supercritique ou gazeuse sans sortir du cadre de la présente invention.

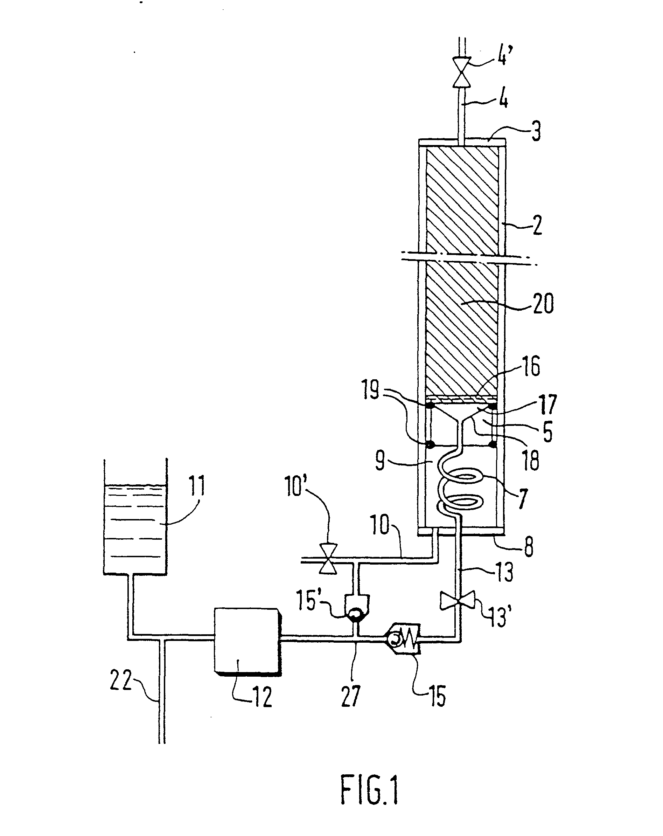

La figure 1 représente la colonne d'un chromatographe en phase liquide et ses éléments connexes.

La figure 1 consiste en une représentation schématique d'un appareil de chromatographie 1 comprenant un tube 2 dont une chambre 20 est destinée à contenir un garnissage ou masse adsorbante, une paroi d'extrémité, en l'occurrence un couvercle 3 présentant des moyens 4 de communication avec l'extérieur et une vanne 4'.

Ce tube 2 comporte un corps ou piston 5 coulissant longitudinalement dans le tube 2 et présentant des moyens de liaison avec un conduit 7, consistant en un tube souple communiquant avec l'extérieur. Entre le corps coulissant 5 et le fond 8 de la colonne 1 est formée une enceinte 9 dans laquelle débouche une conduite 10 de dérivation d'un fluide hydraulique provenant d'un réservoir 11 et alimenté par une pompe 12. Une vanne 10' d'évacuation et un clapet taré 15' sont placés sur la conduite 10. Le tube souple 7, dont la longueur est au moins égale à la course possible du corps coulissant (donc pratiquement égale à la longueur du tube 2) débouche dans un conduit 13 comportant une vanne 13' et un clapet taré 15. Les conduites 13 et 10 se réunissent en un point 27 en aval de la pompe 12 par rapport au sens d'écoulement du fluide.

Les moyens de liaison sont formés de plaques poreuses 16 résistant à la pression et d'un conduit 17 dont la partie supérieure a une forme d'entonnoir 18. Des moyens d'étanchéité 19 consistant en des joints annulaires tels que des joints toriques à section circulaire et/ou à lèvres, sont disposés entre le tube 2 et le corps coulissant 5 et sont, de préférence, portés par le corps 5 en forme de piston.

Le dispositif de chromatographie selon la figure 1 fonctionne de la façon suivante :

Le couvercle 3 étant enlevé, on verse dans le tube 2, par exemple une suspension dans un liquide des particules adsorbantes telle qu'un gel de silice. Le couvercle 3 est remis en place et fixé de façon que la fermeture soit étanche. La vanne 4' est ouverte, la vanne 13' fermée. On provoque alors le déplacement du corps coulissant 5 par mise en fonctionnement de la pompe 12 et injection de fluide hydraulique dans l'enceinte 9 par la conduite 10 (dans ce cas l'agent d'élution), sous une pression suffisante pour provoquer le déplacement ascendant du corps coulissant et exercer une pression sur la suspension se trouvant dans le tube 2 et ainsi faire refouler le liquide par le conduit 4 et l'évacuer par cette conduite.

Lorsque le liquide de la suspension est totalement évacué, la vanne 13' est ouverte et la pression exercée par la pompe 12 est fixée à une pression de travail supérieure à la pression destinée à régner dans la colonne de chromatographie pendant son fonctionnement.

Le mélange à chromatographier est destiné à être introduit par la conduite 22 et le clapet taré 15, la vanne 13' étant ouverte, et, après traitement, à quitter la zone de traitement par le conduit 4, tandis que par le clapet 15', le mélange passe dans l'enceinte 9.

En fait, à titre d'exemple du fonctionnement de la colonne sont données ci-dessous des indications chiffrées non limitatives :

a) étape de remplissage de la masse adsorbante.

Il s'agit de la phase de tassement.

La pression exercée par la pompe est de 10 bars. Lorsque le liquide de la suspension a été complètement évacué par la conduite 4 et que la masse est donc convenablement tassée, on met en oeuvre l'étape de chromatographie.

b) étape de chromatographie.

La pression exercée par la pompe 12 d'amenée du mélange à chromatographier est de 53 bars.

Cette pression, après passage par le clapet 15 taré à 13 bars tombe à 40 bars, qui est la pression correspondant à la perte de charge de la colonne.

Dans la conduite 10 de dérivation, du fait de ce que le clapet 15' est taré à 3 bars, la pression après passage de ce clapet est de 50 bars qui est la contre-pression s'exerçant sur le corps coulissant 5 dans l'enceinte 9 s'opposant à la pression régnant dans la colonne 2.

On constate que la partie active du tube 2, c'est-à-dire celle qui contient le garnissage 20, dans laquelle la chromatographie est destinée à être réalisée peut avoir tout volume déterminé.

Par ailleurs, si on souhaite purger l'enceinte 9, il suffit d'ouvrir la vanne 10.

Le mode de réalisation de la figure 1 est d'un grand intérêt économique puisque, en outre, on emploie pour mouvoir le corps coulissant 5 et maintenir le tassement de la masse adsorbante, la pression créée par la pompe d'alimentation du mélange à chromatographier et de l'éluant. Les problèmes d'étanchéité sont, en outre, résolus puisque l'enceinte 9 et la partie du tube contenant le garnissage 20 contiennent le même mélange.

Par ailleurs, dans le cas où se produirait au bout d'un temps de fonctionnement relativement important de l'appareil un faible tassement de la masse adsorbante (dû à une dilution d'une petite proportion des particules, à une contraction ou à toute autre raison), il est possible de compenser ce tassement par déplacement correspondant du corps coulissant 5.

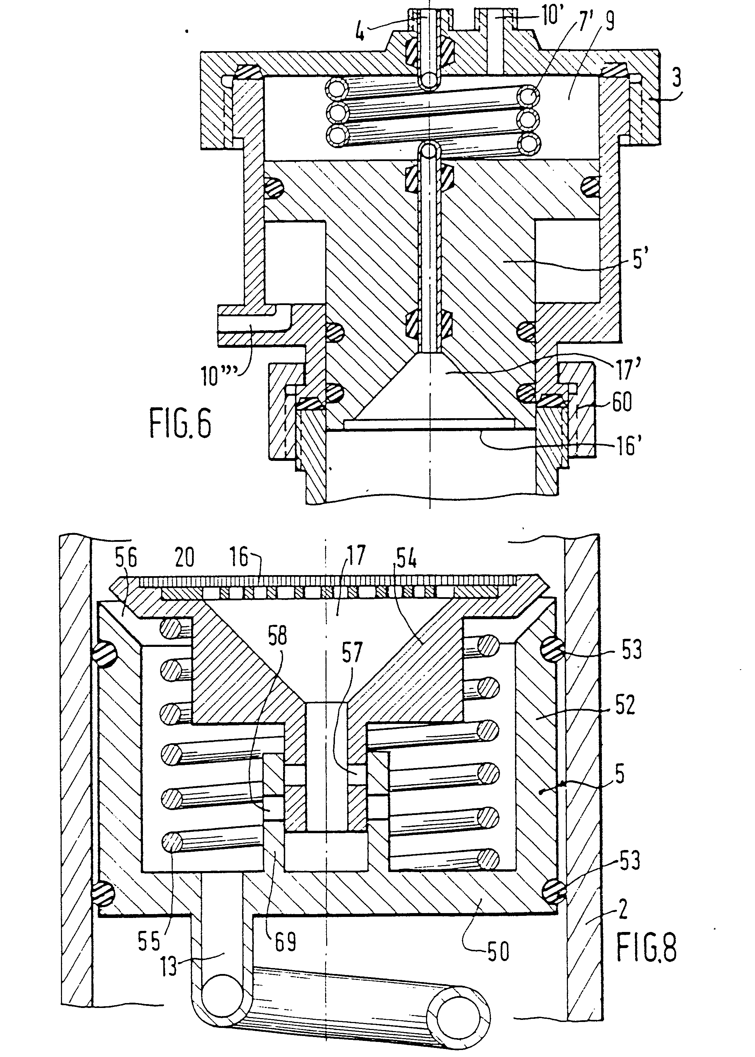

Le corps coulissant dans ce mode de réalisation de la figure 1 est montré dans la partie inférieure de la colonne. Il pourrait, bien entendu, être placé dans la partie supérieure, ou encore il serait possible que la colonne comporte deux corps coulissants chacun situé à l'une des extrémités de la colonne, une liaison étant établie entre la conduite 10, en aval du clapet 15' et l'enceinte formée entre le corps coulissant placé au sommet de la colonne et la paroi d'extrémité correspondante ou, plus généralement, une liaison étant établie entre les deux enceintes 5 ainsi créées (voir description de la figure 5 ci-après).

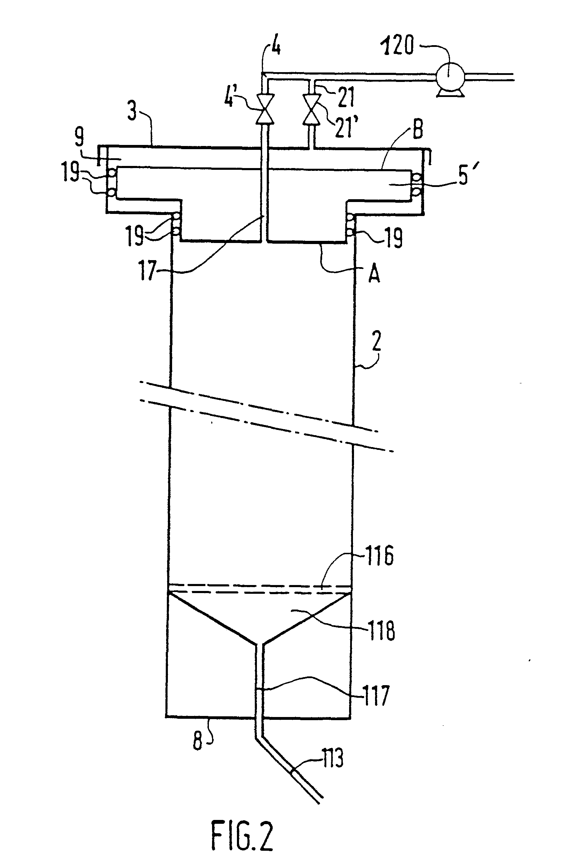

La figure 2 représente un deuxième mode de réalisation de l'appareil de chromatographie de l'invention surtout destiné à compenser les tassements pouvant se produire dans la masse adsorbante.

L'appareil de chromatographie représenté sur cette figure comporte un certain nombre de références identiques à celles de la figure 1 qui correspondent aux mêmes éléments constitutifs. Les éléments portant la même référence précédée du chiffre 1 correspondant à des éléments ayant la même fonction quoiqu'ils puissent être d'une construction différente.

Sur le tube 4, est disposée une pompe 120 et est prévue une dérivation 21 et une vanne 21'. Le corps coulissant 5' comporte une face B, du côté de l'enceinte 9 et une face A du côté de la masse adsorbante telles que la surface de la face B est supérieure à la surface de face A. La force donc exercée sur la face A est inférieure à la force exercée sur la face B.

Le mélange à chromatographier et/ou l'éluant peut être amené par la conduite 4 et après purification être évacué par les conduites 117 et 113.

Une partie du mélange peut être dérivée par la conduite 21, la vanne 21' étant ouverte et pénétrer dans l'enceinte 9. Du fait de la différence de surfaces des faces B et A du corps coulissant 5, la force exercée en B est supérieure à la force exercée en A et il en résulte que les tassements de la masse adsorbante sont compensés au fur et à mesure où ils se produisent.

La pression d'alimentation de la pompe 120 étant 120 bars est identique à la pression destinée à régner dans la colonne.

Pour fixer les idées, par exemple, la surface de la face A étant de 85 cm$^2$ et la surface de la face B étant de 78,5 cm$^2$, il en résulte une pression d'appui sur le garnissage de 10 bars.

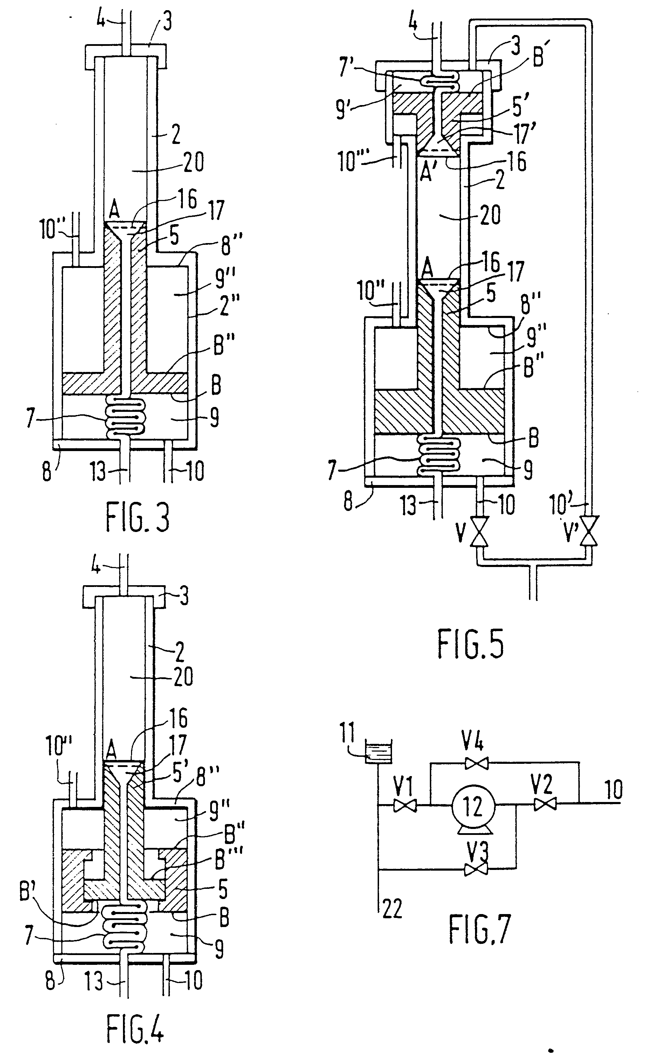

Il est évident que la solution de la figure 2 permet de résoudre élégamment le problème des pressions c'est-à-dire que les efforts de pression servant à déplacer le piston soient supérieurs aux efforts de pression en sens inverse exercés par le fluide dans la chambre chromatographie. Dans le cas de la figure 1, le piston a des sections égales, il faut que la pression en 9 soit supérieure à celle en 120. Dans le cas de la figure 2, la pression unitaire peut être la même sur A et sur B dès lors que la surface de B est supérieure à celle de A. Or, comme on l'a souligné, si l'on veut que le piston ait une course suffisamment longue, cela prolonge d'autant la hauteur de la colonne. Si cet allongement en hauteur ne gêne pas (local de grande hauteur ou petit chromatographe de laboratoire), on peut recourir à des dispositifs de type de la figure 3. On y retrouve dans les mêmes numéros de référence, les éléments des figures 1 et 2.

La partie B du piston à large section laisse un espace 9" entre sa face B" » et l'épaulement 8" qui sépare les parties du tube 2 et 2" de diamètre différents. La course du piston est limitée par cet épaulement 8" contre lequel vient buter la face B" de la partie du piston à large section.

Or, une fois le garnissage tassé (et le liquide expulsé du gel par exemple), la pression nécessaire au maintien du tassement en 20 peut être plus faible ; on pourrait dès lors se contenter d'efforts de pression moins importants. On peut alors recourir à des solutions du type de la figure 4. Dans ce cas, lorsque la face B » de large section du piston vient buter en 8", la partie 5' du piston continue à avancer, la pression en 9 ne s'exerçant plus que sur la section intermédiaire B' du piston qui se déplace dans l'alésage interne de la partie du piston 5 à large section. Ceci réduit donc les efforts résultants exercés sur B' et sur 5' et donc réduit les efforts à ce qui est utile pour assurer le maintien du tassement.

On pourrait également comme à la figure 5 combiner un piston inférieur pour le tassement de remplissage et un piston supérieur pour le maintien du tassement au cours des étapes de chromatographie. On se retrouve dans un cas mentionné incidemment plus haut où les enceintes 9 et 9' sont alimentées via 10 et 10' à partir de la même source et peuvent d'ailleurs être remises en communication par ouverture des vannes V et V'

En effet, dans ce cas lorsque le piston inférieur vient buter (B » en 8 ») le piston supérieur entre ensuite en jeu. Si les paramètres dimensionnels sont choisis adéquatement, le piston inférieur peut assurer le tassement et le supérieur son maintien pendant l'étape chromatographique proprement dite.

On remarquera que, comme dans tous les autres cas où le remplissage le plus aisé se fait en introduisant le garnissage par le haut, il faut enlever le chapeau 3 et le piston supérieur 5'. La section B étant supérieure à B', elle-même supérieure à A, lors du tassement c'est le piston inférieur qui avance. Lorsque B" vient buter en 8", le piston 5 s'immobilise et le piston 5' avance assurant le maintien du tassement à efforts réduits (qui plus est le poids du piston 5' peut jouer dans ce maintien du tassement).

A la figure 6 on a représenté une tête de colonne démontable dans son ensemble c'est-à-dire avec son piston. Un dispositif d'assemblage tel que la bague 60 permet de placer l'ensemble sur la colonne tubulaire 2. Ceci est valable aussi bien pour le piston haut que pour le piston bas, la partie tubulaire de la colonne étant réduite à un simple tube cylindrique. Une telle disposition permet une grande souplesse de montage (un ou deux pistons à sections diverses, etc..).

Lorsque l'étape chromatographique est terminée, si l'on veut revenir à l'état initial au moins en partie, il faut ramener les pistons. Deux solutions sont possibles : amener la pression en 10" (figures 3, 4, 5) et 10'" (figures 5 et 6) ou, si l'on ne veut pas recourir à cette solution exercer une dépression en 10 (figures 3, 4, 5) et 10' (figures 5 et 6). Pour ce faire, il suffit d'inverser le montage de la pompe par exemple grâce au dispositif de la figure 7 ou à des équivalents un jeu de vannes et de canalisations assurant l'inversion.

Lorsque V1 et V2 sont ouvertes, V3 et V4 fermées, le fluide circule dans un sens par exemple de gauche à droite dans la pompe et inversement lorsque V1 et V2 sont fermées et V3 et V4 ouvertes. Les autres références de la figure 7 sont reprises de la figure 1.

En ce qui concerne la structure même des pistons, on se reportera à la figure 8.

Tout piston ou autre corps coulissant présente des dispositifs d'étanchéité tels que joints ou segments de sorte que le garnissage particulier tend à s'introduire dans le jeu existant entre piston et paroi de la colonne tubulaire.

Il est évident que ceci peut entraîner blocages et usures ainsi que des fuites qui en résulteraient.

Il est donc utile dans toute la mesure du possible d'écarter les particules de garnissage au voisinage de la périphérie du piston. Pour ce faire, lors de l'avance du piston, c'est-à-dire durant les opérations de tassement, on amène le liquide non par la partie centrale du piston mais par des ouvertures réparties le long de la périphérie, ces ouvertures étant fermées pendant l'étape chromatographique. Ceci peut donc s'appliquer à tous les pistons de figures 1 à 6.

Dans le tube 2 est monté le piston 5 constitué par un corps creux 50 formé d'un fond 51 et d'une paroi périphérique 52. Dans cette paroi sont ménagées des gorges contenant joints 53 ou segments ou autres dispositifs d'étanchéité. A l'intérieur de ce corps, repose un élément mobile 54 en forme générale d'entonnoir 17 (même référence qu'aux figures précédentes) formé par un ensemble formé d'une grille et d'un matériau formant ensemble une plaque poreuse 16 laissant passer le fluide mais étanche aux particules de garnissage reposant sur sa face supérieure. Cet élément 54 repose sur un ressort 55 qui le tient normalement à distance du corps 50 et ménage entre leurs périphéries une lumière 56. Le fluide arrivant en 13 peut donc s'écouler vers la chambre 20 par cette lumière périphérique 56. Lorsque le piston 5 est en fonction de tassement, dès que la pression est suffisante pour comprimer le ressort 55, l'élément 54 s'enfonce dans le corps 50 et les lumières se ferment. Les ouvertures 57 percées dans le bas de l'entonnoir 54 viennent se placer face aux trous 58 d'un cylindre 59 solidaire du fond 51, ce qui ouvre l'accès de l'entonnoir au fluide arrivant en 13. En tarant le ressort à la pression de fin de tassement, on obtient un passage automatique d'une position à l'autre. Lorsque le fluide arrive en 56, il empêche les particules de garnissage de pénétrer dans le jeu entre piston et tube, ce qui permet d'éviter des incidents lors de l'avance du piston. Lorsque le fluide arrive par l'entonnoir, il est prêt pour l'opération chromatographique proprement dite.

Il est évident que les modes de réalisation des figures ne sont donnés qu'à titre illustratif et que, par exemple, en ce qui concerne la figure 8, d'autres systèmes peuvent produire les mêmes effets par des moyens équivalents. L'homme de l'art saura adapter aisément l'appareillage et les conditions de fonctionnement à diverses modifications. Il faut d'ailleurs remarquer que, dans la présente description, afin de l'alléger, ont été omis des détails de construction ou de fonctionnement qui sont évidents pour l'homme de l'art.

## Revendications

1. Ensemble de colonne chromatographique constitué essentiellement par une colonne tubulaire (2) dans laquelle est formée une chambre de chromatographie tubulaire (20) recevant le garnissage, lequel est tassé, grâce à une pression fluide exercée dans la colonne tubulaire (2) fermée à ses deux extrémités (3, 8), dans une chambre (9) comprise dans la colonne (2) entre un piston (5) et l'extrémité (8) opposée au garnissage, des moyens de communication (16, 17, 4) étant prévus à travers le piston (5) et ladite extrémité (8) opposée au garnissage pour assurer la circulation du fluide à chromatographier, caractérisé par le fait qu'il comprend au moins un piston (5, 5') mû par ledit fluide sous pression introduit dans au moins une enceinte (9, 9') comprise dans la colonne (2) entre au moins un piston (5, 5') et l'extrémité (3, 8) correspondante, lesdits moyens de communication comprenant au moins une canalisation souple (7, 7').

2. Ensemble selon la revendication 1, caractérisé par le fait qu'il est muni de deux pistons (5, 5') entre lesquels est ménagée la chambre (20) de chromatographie recevant le garnissage.

3. Ensemble selon l'une des revendications 1 à 2, caractérisé par le fait que le fluide propulseur est constitué par l'éluant ou le mélange à chromatographier.

4. Ensemble selon l'une des revendications 1 à 3, caractérisé par le fait que pour assurer le tassement, la pression du fluide propulseur dans au moins une enceinte (9, 9') est supérieure à celle dans la chambre de chromatographie (20).

5. Ensemble selon l'une des revendications 1 à 4, caractérisé par le fait qu'au moins l'un des pistons (5, 5') est à deux sections coulissant dans des alésages correspondants dudit ensemble, la section la plus petite (A, A') étant située du côté de la chambre chromatographique (20) et la plus grande (B, B') du côté de l'enceinte (9, 9') recevant le fluide propulseur.

6. Ensemble selon la revendication 5, caractérisé par le fait que le fluide propulseur est à la même pression que la chambre chromatographique (20) pour assurer le tassement.

7. Ensemble selon l'une des revendications 5 ou 6, caractérisé par le fait que l'espace (9'') compris entre le changement de section (8'') de l'alésage et le changement de section correspondant B'' du piston est en communication (10'', 10''') avec le fluide propulseur pour assurer le retour du piston.

8. Ensemble selon l'une des revendications 1 à 7, caractérisé par le fait que le circuit d'alimentation d'au moins une enceinte (9, 9') en fluide propulseur est muni d'un dispositif d'inversion ($V_1$, $V_2$, $V_3$, $V_4$), pour assurer le retour d'au moins un piston (5, 5') correspondant.

9. Ensemble selon l'une des revendications 1 à 9, caractérisé par le fait qu'au moins l'une des extrémités est constituée par une tête amovible contenant le piston correspondant (5') et les dispositifs de communication et de propulsion (4, 10', 7', 17', 16', 10''').

10. Ensemble selon l'une des revendications 1 à 9, caractérisé par le fait que le fluide à chromatographier arrivant dans au moins un piston (5, 5') parvient à la chambre chromatographique (20) par des ouvertures périphériques (56) de la face du piston située du côté du garnissage.

11. Ensemble selon la revendication 10, caractérisé par le fait que lesdites ouvertures (56) sont fermées lors de l'étape chromatographique, le fluide arrivant alors par un entonnoir (17) ouvert vers le garnissage et pratiqué dans le piston (5) correspondant, fermé du côté du garnissage par un dispositif (16) résistant à la pression, perméable au fluide mais non au garnissage.

## Claims

1. Chromatographic installation comprising a tubular chromatographic column (2) wherein a tubular chromatographic chamber (20) is defined which is adapted to receive the packing, said packing being compacted by means of a fluid pressure exerted in the tubular column (2) which is closed at its two ends (3, 8), within a chamber (9) defined in said column (2) between a piston (5) and the end (8) opposed to the packing, while communication means (16, 17, 4) are provided across said piston (5) and said end (8) opposed to the packing so as to allow the circulation of the fluid subjected to analysis by chromatography, characterized in that it comprises at least one piston (5, 5') actuated by said pressurized fluid which is introduced into at least ons space (9, 9') defined in said column (2) between at least one piston (5, 5') and the corresponding (3, 8), and in that said communication means comprise at least one flexible conduit (7, 7').

2. Installation according to claims 1, characterized in that it comprises two pistons (5, 5') between which the chromatography chamber (20) adapted to receive the packing is defined.

3. Installation according to any one claims 1 and 2, characterized in that the actuating fluid is constituted by the eluant or the mixture to be analyzed by chromatography.

4. Installation according to any one of claims 1 to 3, characterized in that, with a view to effecting the compacting, the pressure of the actuating fluid within at least one space (9, 9') is higher than the pressure within the chromatography chamber (20).

5. Installation according to any one of claims 1 to 4, characterized in that at leat one of said pistons (5, 5') comprises two sections slidably mounted in corresponding bores of said installation, the smaller section (A, A') being located on the side of the chromatography chamber (20), while the larger section (B, B') is located on the side of the space (9,9') receiving the actuating fluid.

6. Installation according to claims 5, characterized in that the pressure of the actuating fluid is equal to the pressure prevailing in said chromatography chamber (20) so as to effect the compacting.

7. Installation according to claims 5 or 6, characterized in that the space (9") comprised between the changement of the section (8 ») of the bore and the corresponding changement of the section (8") of the piston communicates with the actuating fluid so as to cause the piston to return.

8. Installation according to any one of claims 1 to 7, characterized in that the circuit for feeding actuating fluid to at least one space (9, 9') comprises a reverting device (V₁, V₂, V₃, V₄) to cause at least one corresponding piston (5, 5') to return.

9. Installation according to any one of claims 1 to 8, characterized in that at least one of said ends is constituted by a removable head containing the corresponding piston (5') and the communication and actuating devices (4, 10', 7', 16', 10 »).

10. Installation according to any one of the claims 1 to 9, characterized in that the fluid to be analyzed by chromatography which reaches at least one piston (5, 5') flows into the chromatography chamber (20) through peripheral openings (56) provided in the piston face located on the side of the packing.

11. Installation according to claims 10, characterized in that said openings (56) are closed during the chromatographic phase, the fluid then arriving through a funnel (17) wich is open toward the packing and is formed in the corresponding piston (5), while being closed on the side of the packing by a pressure resisting device (16) that is pervious to the fluid, but not to the packing.

## Patentansprüche

1. Chromatographiesäuleneinrichtung mit einer rohrförmigen Säule in welcher eine rohrförmige Chromatographiekammer (20) gebildet ist, die die Packung aufnimmt, welch letztere vermittels eines durch ein Medium innerhalb eines in der an ihren beiden Enden (3, 8) geschlossenen Säule (2) angeordneten Raumes (9) zwischen einem Kolben (5) und dem der Packung entgegengesetzten Ende (8) ausgeübten Druckes komprimiert wird wobei der Kolben (5) und das der Packung entgegengesetzte Ende (8) mit den Durchgang des chromatographisch zu untersuchenden Mediums gestattenden Verbindungsmitteln (16, 17, 4) versehen sind, dadurch gekennzeichnet, dass sie wenigstens einen durch das Druckmedium betätigten Kolben (5, 5') und dem entsprechenden Säulenende (3, 8) innerhalb der Säule (2) gebildeten Raum (9, 9') eingelassen wird, und wobei die Verbindungsmittel wenigstens eine biegsame Leitung (7, 7') umfassen.

2. Einrichtung nach Anspruch 1, dadurch gekennzeichnet, dass sie zwei Kolben (5, 5') umfasst, zwischen denen die die Packung aufnehmende Chromatographiekammer (20) gebildet ist.

3. Einrichtung nach Anspruch 1 oder 2, dadurch gekennzeichnet, dass das Betätigungsmedium durch das chromatographisch zu untersuchende Eluierungsmittel bzw. Gemisch gebildet ist.

4. Einrichtung nach einem der Ansprüche 1 bis 8, dadurch gekennzeichnet, dass zwecks Komprimierung der Packung der Druck des Betätigungsmediums in wenigstens einem Raum (9, 9') höher ist als in der Chromatographiekammer (20).

5. Einrichtung nach einem der Ansprüche 1 bis 4, dadurch gekennzeichnet, dass wenigstens einer der Kolben (5, 5') zwei in entsprechenden Bohrungen der Einrichtung verschiebbare Querschnitte besitzt, wobei der kleinere Querschnitt (A, A') auf der der Chromatographiekammer (20) zugekehrten Seite und der grössere Querschnitt (B, B') auf der dem das Betätigungsmedium aufnehmenden Raum (9,9') zugekehrten Seite angeordnet ist.

6. Einrichtung nach Anspruch 5, dadurch gekennzeichnet, dass das Betätigungsmedium zwecks Komprimierens der Packung unter dem gleichen Druck steht, wie die Chromatographiekammer (20).

7. Einrichtung nach Anspruch 5 oder 6, dadurch gekennzeichnet, dass der zwischen der Querschnittsänderung (8") der Bohrung und der entsprechenden Querschnittsänderung (B") des Kolbens gebildete Raum (9") zwecks Rückführung des Kolbens mit dem Betätigungsmedium in Verbindung steht (10", 10''').

8. Einrichtung nach einem der Ansprüche 1 bis 7, dadurch gekennzeichnet, dass der wenigstens einen Raum (9, 9') mit Betätigungsmedium beschickende Speisekreislauf mit einer Umkehrvorrichtung (V₁, V₂, V₃, V₄) versehen ist, die die Rückführung wenigstens eines entsprechenden Kolbens (5, 5') bewirkt.

9. Einrichtung nach einem der Ansprüche 1 bis 8, dadurch gekennzeichnet, dass wenigstens eines der Enden durch einen den entsprechenden Kolben (5'), sowie die Verbindungs- und Betätigungsvorrichtungen (4, 10, 7', 17', 16', 10''') enthaltenden abnehmbaren Kopf gebildet wird.

10. Einrichtung nach einem der Ansprüche 1 bis 9, dadurch gekennzeichnet, dass das in wenigstens einen Kolben (5, 5') eintretende chromatographisch zu untersuchende Medium über umfänglich an der der Packung zugekehrten Kolbenstirnfläche angeordnete Öffnungen (56) in die Chromatographiekammer (20) strömt.

11. Einrichtung nach Anspruch 10, dadurch gekennzeichnet, dass die Öffnungen (56) während des chromatographischen Vorgangs geschlossen sind und das Medium dabei durch einen im entsprechenden Kolben (5) geformten, nach der Packung zu offenen Trichter eingelassen wird, welcher packungsseitig durch eine dem Druck widerstehende, für das Medium durchlässige, jedoch für die Packung undurchlässige Vorrichtung (16) verschlossen ist.

FIG.1

FIG.2

FIG. 3

FIG. 4

FIG.5

FIG.7

EP 0 145 578 B1

FIG.6

FIG.8